# FASCICULE DE BREVET EUROPEEN

(11) **EP 3 164 759 B1**
(45) Date de publication et mention de la délivrance du brevet: **29.08.2018**
(21) Numéro de dépôt: 15745529.6
(22) Date de dépôt: 30.06.2015
(51) Int. Cl.: G02C 13/00, G01M 11/02, B24B 13/005, G02B 21/00, B24B 49/12

(54) **PROCÉDURE DE VISUALISATION DE MARQUAGES SUR UNE PAIRE DE LUNETTES**
VERFAHREN ZUM BETRACHTEN VON MARKIERUNGEN AUF EINER BRILLE
PROCEDURE FOR VIEWING MARKINGS ON A PAIR OF SPECTACLES

(30) Priorité: 01.07.2014 FR 1456278
(43) Date de publication de la demande: 10.05.2017
(73) Titulaire: M-Optics, 57970 Yutz (FR)
(72) Inventeur: LUCCHESI, Moreno, 33270 Floirac (FR)
(74) Mandataire: Hugues, Catherine
(86) Numéro de dépôt international: PCT/FR2015/051795
(87) Numéro de publication internationale: WO 2016/001575

(56) Documents cités:
- FR-A1- 2 825 308
- FR-A1- 2 853 734
- US-B1- 6 798 501

## Description

La présente invention entre dans les domaines optique et ophtalmique.

La présente invention trouvera son application dans la visualisation de marquages obtenus par gravure sur la surface ou entre les surfaces de toute ou partie d'un verre ophtalmique, ainsi que dans la visualisation des contours de toute ou partie d'un tel verre et les contours d'une monture de verres ophtalmiques.

L'invention concerne un dispositif de visualisation du marquage de verres ophtalmiques.

De manière connue, au cours des étapes de fabrication et d'usinage d'un verre ophtalmique, ci-après désigné « verre », au moins un marquage est réalisé par gravure, moulure ou impression sur la surface, en relief ou en creux, ou bien entre les surfaces, voire incorporé dans la matière, dudit verre ou d'un de ses segments. Ce marquage peut être obtenu notamment en apposant de l'encre, de la peinture, voire un sticker ou autocollant à la surface dudit verre. En fonction de sa réalisation, un marquage est donc provisoire ou permanent.

Un tel marquage sert à référencer et identifier le verre au cours des différentes étapes de traitement qu'il subit, comme l'usinage d'une de ses surfaces chez un fabricant ou une étape de taille ou de montage sur une monture de lunettes chez un opticien. Ledit marquage sert aussi à positionner correctement le verre en vue desdites étapes de traitement. *In fine,* au moment de son positionnement au sein d'une monture, le marquage provisoire sera effacé, tandis que le marquage permanent restera, invisible pour le porteur dudit verre.

Il est alors nécessaire de visualiser ce marquage, à l'oeil nu par un opérateur ou bien de façon automatisée par un appareil de capture adapté, comme une caméra.

Une solution connue est décrite au travers du document FR 2 853 734, concernant un dispositif de visualisation du marquage d'un verre ophtalmique. Un tel dispositif comprend un support destiné à recevoir supérieurement ledit verre et à le positionner sur le parcours d'un rayonnement lumineux. Ce rayonnement est obtenu par une source lumineuse, positionnée à la verticale mais déportée sur le côté par rapport audit support, émettant un faisceau de lumière. Ce faisceau est reflété orthogonalement par une plaque en matériau semi-réfléchissant positionnée inclinée au-dessus dudit support. Puis le faisceau traverse du haut vers le bas une lentille de collimation et un verre teinté, permettant d'obtenir un faisceau parallèle et uniforme. Sous le support, sont positionnés des moyens réfléchissant, recouverts par une plaque protectrice en matériau transparent. Ces moyens réfléchissant sont constitués de faces planes sous forme de coins de cubes creux en matière plastique ou des miroirs. Après avoir traversé le verre, le faisceau est donc réfléchi vers le haut, traversant en sens inverse le verre teinté et la lentille de collimation, avant de croiser de nouveau la plaque semi-réfléchissante. Une caméra, positionnée à la verticale au dessus de ladite plaque, permet alors de capturer le faisceau ainsi réfléchi et de lire le marquage présent sur le verre ophtalmique et reporté ainsi sur ladite plaque. Le document FR 2 825 308 A1 décrit un dispositif de détourage d'un verre ophtalmique et un procédé pour sa mise en oeuvre. Il réalise une analyse d'au moins un marquage d'un unique verre ophtalmique au sein d'une monture de lunettes. L'écran du moniteur est fourni avec des moyens de visualisation, à la même échelle, le contour de la monture étant celui du verre non détouré avec des points de repérage qui sont portés sur le verre. Un inconvénient lié à cette technique réside dans le fait que la réflexion du faisceau, puis son report sur une lame inclinée, rend difficile la visualisation du marquage, entrainant des défauts de netteté et des erreurs de parallaxe. De plus, l'utilisation d'une caméra sur un plan incliné rend difficile la mise au point, entrainant des flous dans l'image ainsi capturée. En effet, l'image des marquages effaçables est enregistrée par la caméra directement sur le verre et l'image des marquages permanents sur le système réfléchissant. La distance entre le verre et le système réfléchissant est incompressible et variable en fonction dudit verre. Cette distance provoque des erreurs de parallaxe entre les marquages permanents et effaçables. Ainsi, la mesure de l'alignement dans l'image obtenu par un tel système est entachée d'erreurs provenant de la parallaxe, fonction du verre mesuré.

En outre, la netteté de l'image est difficile à obtenir, du fait que la mise au point doit convenir à deux plans distincts et éloignés, contenant le verre et le système de réfléchissant. Le réglage est d'autant plus difficile que ces deux plans varient avec les caractéristiques géométriques et optiques du verre.

De plus, il n'est pas possible à un opérateur de contrôler directement le report déformé sur la lame inclinée, rendant obligatoire la capture par une caméra et un traitement numérique de l'image capturée, afin de visualiser correctement le marquage ainsi reporté.

Les erreurs de parallaxes inhérentes aux systèmes de vision induisent des erreurs supplémentaires d'alignement des marquages effaçables, dont l'utilisation est moins précise que de se baser sur les marquages permanents, plus difficiles à visualiser. Il en résulte une erreur de positionnement du verre, diminuant les caractéristiques optiques finales prévues par les fabricants.

Le positionnement du verre au moyen de marquages effaçables est moins précis que via le marquage permanent, car le marquage effaçable a été réalisé par rapport au marquage permanent avec une certaine tolérance.

Il y a aussi une erreur de parallaxe inhérente à la courbure de la surface du verre, sur laquelle est apposé le marquage effaçable. Il existe donc une nécessité de se référer au marquage permanent, ce que n'opèrent pas la plupart des systèmes existants.

Dans le cas particulier de verres progressifs, ils doivent être bloqués de façon décentrée et inclinée par rapport à l'axe de la caméra, les valeurs et le sens de centrage et d'inclinaison étant variables suivant la prescription du porteur de lunettes.

Une fois le taillage des verres ophtalmiques et/ou solaires fini, ils doivent être montés dans une monture.

L'opticien contrôle alors le montage dans la monture. Pour ce faire, l'opticien mesure principalement les écarts et demi écarts pupillaires, les hauteurs de montage et l'axe (orientation) des verres dans la monture, afin de vérifier et ajuster si nécessaire la monture pour qu'elle corresponde à la prescription du porteur de ces lunettes.

Les moyens et procédés actuels de contrôle du montage des verres ophtalmiques et/ou solaires dans les montures nécessitent d'apposer des marques temporaires sur les verres afin de repérer les éléments principaux des verres, comme le centre optique, les gravures des verres progressifs, l'axe du cylindre, l'axe de polarisation, car ces caractéristiques ou les repères faits par le fabricant du verres ne sont pas visibles ou mesurables directement par les moyens actuels de contrôle. Apposer ces repères est difficile, fastidieux et coûteux en temps pour l'opticien.

A ces inconvénients, se rajoutent d'autres problèmes :
Des dégradations du verre par rayures lors des manipulations sont inévitables.

Sachant qu'il est difficile de faire adhérer ces marques à cause des traitements des verres qui sont de type hydrophobe, antibuée, antisalissure, antistatique, des marquages particuliers doivent être appliqués. Ainsi les propriétés physico-chimiques de ces marques peuvent endommager, lors de leur application et/ou de leur retrait, les propriétés des traitements des verres.

La précision des mesures à l'aide de ces moyens connus est de quelques millimètres seulement. A laquelle se rajoutent l'incertitude due à la mesure indirecte et la précision de mesure liée à la dextérité de l'opticien.

Parmi les moyens actuels, le plus utilisé par l'opticien consiste en un marquage au feutre des verres sur un frontofocomètre ou à l'oeil nu sous une lampe pour les verres progressifs, l'opticien mesure l'écart pupillaire à la main avec une règle ou un réglet, en le posant sur la monture et les verres. Cette manipulation laisse fréquemment des micro-rayures sur les verres et/ou sur la monture.

La règle et le réglet mesurent une distance entre les repères apposés sur les verres donc la mesure des écarts pupillaires. L'incertitude peut dépasser le millimètre. Cette méthode ne permet pas de mesurer l'orientation des verres dans une monture. Ceci s'applique plus particulièrement aux verres progressifs, aux verres pour astigmate et aux verres polarisants. Ainsi l'orientation est primordiale pour correspondre à la correction et au confort attendu par le porteur de lunettes. La règle ou le réglet ne permettent pas non plus la mesure des demi-écarts pupillaires, surtout lorsque la monture est asymétrique.

Dans les systèmes de contrôle actuels, les cartes de contrôle posent les mêmes problèmes de précision et dégradation du verre que le réglet à cause du frottement du verre sur la carte de contrôle. S'ajoutent les erreurs dues à la parallaxe. Il n'y a pas non plus de mesure de l'axe des verres par rapport à la monture.

Les machines disponibles sur le marché ne contrôlent que la moitié de la monture et un verre à la fois et ne permettent donc pas de mesurer directement les côtes qui relient les deux verres comme l'écart pupillaire. Ces machines mesurent en fait deux côtes qui ne correspondent pas nécessairement au demi-écart pupillaire. De même en ne voyant que la moitié des lunettes cette machine ne mesure pas l'axe des verres par rapport à une ligne de référence prise sur l'ensemble des lunettes constituées des deux verres comme définie par l'usage, l'enseignement ou la norme.

La présente invention a pour but de pallier les inconvénients de l'état de la technique, en proposant d'effectuer un report du marquage dans un unique plan, aligné avec la source lumineuse et le verre. De plus, le faisceau lumineux est émis dans une seule direction, sans être réfléchi. Ainsi, l'invention permet d'obtenir une netteté améliorée, sans erreur de parallaxe, ni flou, ni problème de réflexion ou de diffraction du faisceau lumineux.

Pour ce faire, l'invention concerne un procédé de visualisation de marquage d'un verre ophtalmique et un dispositif de visualisation, permettant la mise en oeuvre dudit procédé.

Tout d'abord, la présente invention concerne un procédé de visualisation en une seule manipulation d'au moins un marquage de chaque verre ophtalmique au sein d'une monture de lunettes selon la revendication 1. Ledit procédé peut aussi comprendre l'étape suivante : le déplacement de ledit écran de visualisation peut être périodique sous forme d'une translation ou d'une vibration.

Il peut consister à mesurer des points du faisceau visualisé sur ledit écran de visualisation en déplacement, comme la mesure des écarts pupillaires et des demi-écarts pupillaires.

Il peut consister à effectuer un traitement logiciel automatique du faisceau visualisé sur ledit écran de visualisation en déplacement et de reconnaissance d'au moins un marquage situé au niveau de chaque verre.

Le traitement peut consister à reconnaître les marquages permanents et provisoires de chaque verre et de comparer la position relative des marquages permanents par rapport aux marquages provisoires.

Il peut consister à effectuer une opération de glantage de chaque verre.

Il peut consister à positionner deux verres, maintenus au sein d'une monture de lunettes, sur ledit support.

Par ailleurs, l'invention concerne un dispositif de visualisation en une seule manipulation d'au moins un marquage de chaque verre ophtalmique maintenu au sein d'une monture de lunettes selon la revendication 8. Avantageusement, le dispositif de visualisation comprend des moyens de variation de l'intensité lumineuse desdites sources lumineuses.

Selon d'autres caractéristiques additionnelles, non limitatives, ladite source lumineuse peut être située au-dessous dudit support, tandis que ledit écran de visualisation est situé au-dessus dudit support.

Ladite source lumineuse peut être située au-dessus dudit support, tandis que ledit écran de visualisation est situé au-dessous dudit support.

Le dispositif de l'invention peut comprendre des moyens de capture sous forme d'au moins un scanner lumineux, une caméra, une caméra équipant un téléphone ou équipant une tablette, positionnée du côté de la face opposée dudit écran de visualisation par rapport audit faisceau.

Il peut encore comprendre des moyens de mesure de l'écartement des points dudit faisceau sur ledit écran de visualisation au niveau de sa face opposée.

Le dispositif peut être couplé à une machine de glantage.

L'invention permet notamment à un opérateur de visualiser et de distinguer directement à l'oeil nu le marquage ainsi reporté, sans faire intervenir de moyens de capture, comme une caméra, ni de traitement numérique de l'image capturée.

L'invention permet aussi d'effectuer des mesures au niveau de l'écran de visualisation translucide de visualisation sur laquelle le faisceau est reporté. De telles mesures peuvent cibler l'écart ou le demi-écart pupillaire.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement une vue en coupe selon un plan vertical médian d'un premier mode de réalisation du dispositif selon l'invention, lors de sa mise en oeuvre pour la visualisation de marquage d'au moins un verre ophtalmique ;
- la figure 2 représente schématiquement une vue similaire à la figure 1 d'un second mode de réalisation dudit dispositif de visualisation ;
- la figure 3 représente schématiquement une vue de face d'une monture de lunettes comprenant des verres ophtalmiques ;
- la figure 4 représente schématiquement une vue en coupe latérale d'un troisième mode de réalisation du dispositif selon l'invention lors de sa mise en oeuvre pour la visualisation de marquage d'au moins un verre ophtalmique ;
- la figure 5 représente schématiquement une vue en coupe latérale d'un quatrième mode de réalisation du dispositif selon l'invention lors de sa mise en oeuvre pour la visualisation de marquage d'au moins un verre ophtalmique.

La présente invention vise la visualisation d'au moins un marquage d'au moins un verre ophtalmique 1 ou de deux verres maintenus au sein d'une monture de lunettes.

Afin de visualiser ce marquage, il est nécessaire d'illuminer chaque verre 1, afin de reporter l'image dudit marquage sur une autre surface, où ladite image s'affiche et est plus facilement lisible.

Pour ce faire, l'invention met en oeuvre un dispositif 2 de visualisation d'au moins un marquage de chaque verre 1.

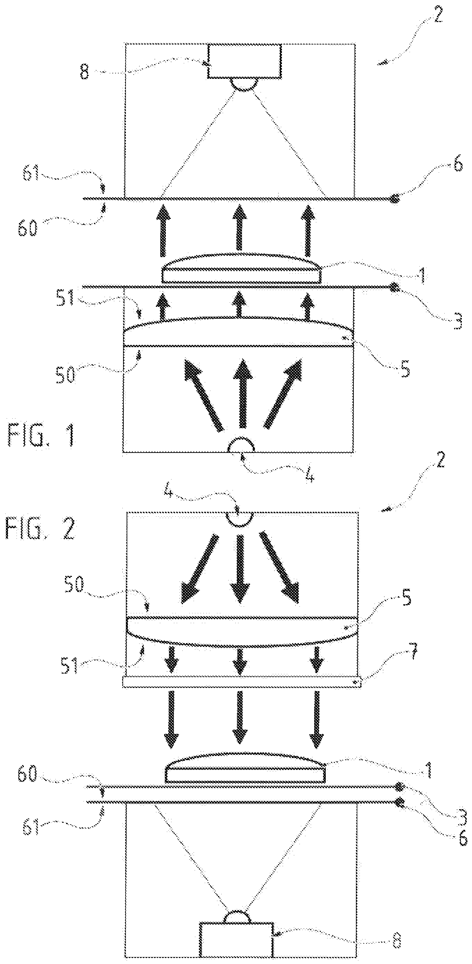

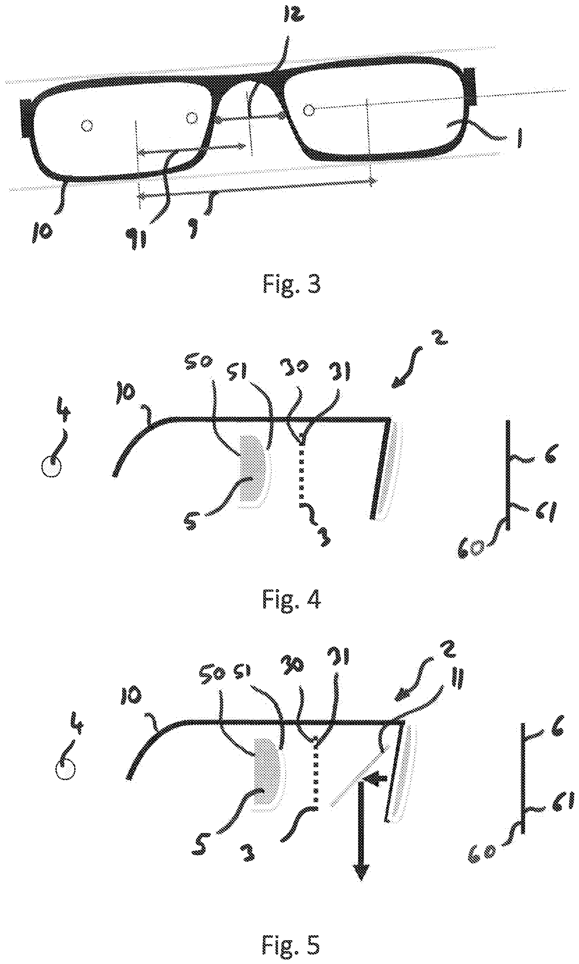

Ce dispositif 2 s'étend préférentiellement verticalement, comme visible sur les deux modes de réalisation des figures 1 et 2, mais il peut aussi être orienté différemment, comme par exemple horizontalement ou de façon inclinée comme représenté sur les figures 4 et 5.

Dans un tel dispositif 2, les différents éléments se retrouvent alignés, selon un même axe médian longitudinal. Cet alignement se traduit par une disposition orthogonale ou sensiblement orthogonale par rapport audit axe.

Le principe mis en oeuvre pour simplifier la visualisation dudit marquage réside tout d'abord dans le fait que l'éclairage s'effectue selon un seul unique sens, selon des directions parallèles ou sensiblement parallèles, de préférence parallèles audit axe médian longitudinal. En d'autres termes, le parcours de la lumière au sein du dispositif 2 et lors de la mise en oeuvre du procédé de visualisation, s'effectue depuis une extrémité vers l'autre, dans le sens longitudinal, de préférence vertical. Il n'y a alors aucune perte de netteté provenant d'un éventuel réfléchissement de la lumière émise.

Pour ce faire, ledit dispositif 2 peut comprendre un support 3 destiné à être disposé au contact ou à proximité de chaque verre 1, ou bien de deux verres, maintenus au sein d'une monture 10 de lunettes. On positionne donc chaque verre 1 ou la monture 10 sur ledit support 3.

Un tel support 3 peut être prévu transparent, à savoir qu'il laisse intégralement passer la lumière qui le traverse, sans réflexion ou diffraction (ou avec un minimum de réflexion ou de diffraction).

Un tel support 3 transparent peut être constitué par une lame en verre, en plastique ou en matériau composite.

Ce support 3 peut permettre de recevoir chaque verre 1 ou une monture 10, telle que représentée sur les figures 3 à 5, pourvue de deux verres. Selon les modes préférentiels de réalisation, selon un alignement vertical des éléments dudit dispositif 2, le support 3 supporte chaque verre 1, ou bien la monture sur laquelle sont montés les deux verres 1, sous le simple effet de la gravité. Selon une autre disposition, horizontale ou inclinée, des organes d'accrochages ou de fixation temporaire peuvent être prévus afin de maintenir chaque verre 1 ou la monture 10 au contact ou à proximité d'une face dudit support 3.

Une telle disposition horizontale ou inclinée est représentée sur les figures 4 et 5.

Le dispositif 2 comprend aussi au moins une source lumineuse 4 émettant au moins un faisceau lumineux. Ce faisceau est schématisé sur les figures 1 et 2 par des flèches, montrant ses sens d'émission et son sens de propagation le long dudit dispositif 2.

Selon un mode préférentiel de réalisation, lesdites sources lumineuses 4 peuvent être des diodes, notamment « LED » ou « DEL » (pour « Diode ElectroLuminescente »).

Au niveau desdites sources 4, les rayonnements sont diffusés selon plusieurs directions, concentriquement par rapport aux sources 4. Les rayonnements traversent alors au moins une lentille de collimation 5, assurant un traitement optique, permettant au moins de les réorienter et d'obtenir en sortie des dites lentilles 5, un faisceau ou plusieurs faisceaux se propageant au sein et le long du dispositif 2 selon une même direction, à savoir des directions parallèles entre elles et parallèles audit axe médian longitudinal dudit dispositif 2.

Pour ce faire, lesdites lentilles 5 peuvent présenter une face plane 50, orthogonale ou sensiblement orthogonale audit axe médian longitudinal. Cette face plane 50 est située du côté des sources 4 émettrices. La face opposée 51 présente une forme bombée, convexe, suivant un arc de cercle conformé et dimensionné en fonction des dites sources lumineuses 4, ainsi que de leur distance avec les lentilles 5, de manière à réorienter le rayonnement du ou des faisceaux.

L'émission des faisceaux s'effectue de sorte qu'ils traversent chaque verre 1 et éventuellement ledit support 3. On notera que les faisceaux peuvent traverser chaque verre 1 puis le support 3 quand ce dernier est présent, ou l'inverse, en fonction d'où se situent les sources 4.

Selon le premier mode de réalisation visible sur la figure 1, la source 4 se situe sous le support 3 et le faisceau traverse donc d'abord ledit support 3 puis chaque verre 1 qu'il supporte.

Selon le second mode de réalisation visible sur la figure 2, la source 4 se situe au dessus du support 3 et le faisceau traverse donc d'abord chaque verre 1 supporté puis ledit support 3.

Lorsque chaque verre 1 est traversé par un des faisceaux, le marquage génère des opacités, absorbant une partie dudit faisceau. Ce sont ces opacités qui peuvent être reportées sur une surface, afin de les visualiser.

Pour ce faire, le dispositif 2 comprend un écran de visualisation 6 placé à l'opposée des dites sources lumineuses 4 pour visualiser lesdits faisceaux.

Un tel écran de visualisation 6 peut être prévu translucide, à savoir qu'il absorbe au moins une partie du rayonnement lumineux du faisceau, sans pour autant être opaque. De ce fait, il peut ne pas être totalement transparent.

Lors de l'éclairage de chaque verre 1, la face 60 située du côté de chaque verre 1 reçoit le faisceau qui l'a traversé, tandis que la visualisation s'effectue sur la face opposée 61.

Lesdites sources lumineuses 4 et ledit écran de visualisation 6 sont alignés selon un même axe et parallèles entre eux.

Un tel écran de visualisation 6 peut être constitué d'un matériau adapté, présentant les caractéristiques optiques désirées, à savoir de capter le faisceau ainsi que les opacités provenant de sa traversée de chaque verre 1 et correspondant audit marquage. De préférence, mais non limitativement, l'écran de visualisation 6 peut être constitué d'une plaque de verre dépoli, d'un papier de type calque ou analogue, d'une feuille plastique ou composite semi-opaques, d'un matériau présentant un grain avec les propriétés optiques susmentionnées.

De façon essentielle, afin d'éviter de visualiser le grain ou les imperfections de l'écran de visualisation 6 et d'afficher une netteté améliorée, ledit écran de visualisation 6 et/ou lesdites sources lumineuses 4 sont mis en mouvement. Pour ce faire, le dispositif 2 comprend des moyens de mise en déplacement dudit écran de visualisation 6 et/ou desdites sources lumineuses 4 selon un plan orthogonal à la direction desdits faisceaux.

En d'autres termes, l'écran de visualisation 6 et/ou les sources lumineuses 4 sont déplacés par rapport au plan médian longitudinal le long duquel sont redressés les faisceaux par lesdites lentilles 5.

Un tel déplacement dudit écran de visualisation 6 et/ou desdites sources lumineuses 4 peut être périodique, sous forme d'une translation ou d'une vibration.

Ce déplacement confère une uniformité au grain de la surface dudit écran de visualisation 6, en particulier de sa face opposée 61 sur lequel le marquage optiquement reporté peut alors être visualisé.

Le déplacement des sources lumineuses 4 comme alternative au déplacement de l'écran de visualisation produit le même effet d'uniformité de l'image. En effet, les rayons incidents de lumière arrivant selon des angles différents, dus au déplacement d'une des sources lumineuses 4, sur les imperfections de l'écran de visualisation seront réfléchis selon des angles différents.

Selon la rapidité de déplacement de l'écran 6 ou des sources 4, l'oeil humain ne peut différencier les différentes images et va effectuer une moyenne des différentes images qu'il perçoit.

Comme évoqué précédemment, une caractéristique importante réside dans le fait que ladite source 4, ledit support 3 et ledit écran de visualisation 6 sont alignés selon un même axe, à savoir l'axe médian longitudinal, et sont parallèles entre eux.

Selon le premier mode de réalisation visible sur la figure 1, lesdites sources lumineuses 4 sont situées au-dessous dudit support 3, tandis que ledit écran de visualisation 6 est situé au-dessus dudit support 3.

Selon le second mode de réalisation visible sur la figure 2, lesdites sources lumineuses 4 sont situées au-dessus dudit support 3, tandis que ledit écran de visualisation 6 est situé au-dessous dudit support 3.

On notera que, dans cette dernière configuration, une plaque transparente 7 peut être disposée en vis-à-vis de la face convexe 51 de la lentille 5, au-dessus du support 3 recevant chaque verre 1.

Ainsi, au travers d'un unique sens d'émission du faisceau lumineux, traversant chaque verre 1 vers le haut ou vers le bas, on reporte le marquage sur l'écran de visualisation 6 où il peut être visualisé sur sa face opposée 61.

A ce titre, de façon additionnelle, ledit dispositif 2 permet une visualisation directe, à l'oeil nu, par un opérateur, situé du côté de la face opposée 61 de l'écran de visualisation 6.

Le dispositif 2 peut aussi comprendre des moyens 8 de capture sous forme d'au moins un scanner lumineux, une caméra, une caméra équipant un téléphone, notamment un « smartphone », ou bien équipant une tablette tactile, positionnée du côté de la face opposée 61 dudit écran de visualisation 6 par rapport audit faisceau. Ces moyens de capture 8 permettent de photographier ou d'enregistrer des clichés, de préférence numériques, en vue de les afficher sur des moyens connexes, comme l'écran d'un terminal auquel sont reliés lesdits moyens 8.

Dans le cas de l'utilisation d'une caméra, il peut être utile d'effectuer une moyenne de plusieurs images par traitement logiciel afin d'obtenir une image claire.

Le dispositif 2 peut encore comprendre des moyens de mesure de l'écartement des points desdits faisceaux sur ledit écran de visualisation 6 au niveau de sa face opposée 61. Ces moyens permettent de mesurer de façon automatique ou manuellement l'écartement de différents points du marquage reporté sur l'écran de visualisation 6, comme par exemple l'écart pupillaire 9. Ledit support 3 comprend au moins une mire 30.

La ou les mires 30 peuvent être gravées ou déposées sur le support 3.

Dans un autre mode de réalisation, les mires peuvent être intercalées entre lesdites lentilles de collimation 5 et lesdits verres 1.

Elles permettent de quantifier les aberrations et les distorsions. Ainsi elles permettent de calibrer les mesures effectuées à partir des différents marquages. La prise en compte de ces erreurs permet d'obtenir une précision de mesure bien supérieure aux instruments connus de l'homme du métier, telle qu'une incertitude inférieure à 0,25 mm.

Les mires 30 peuvent être composées de grilles 31 au travers desquelles le ou les faisceaux lumineux peuvent se propager.

Les grilles 31 permettent de calculer plus précisément encore les aberrations et distorsions.

Avantageusement, le dispositif de visualisation 2 comprend des moyens de variation de l'intensité lumineuse desdites sources lumineuses 4.

Des variations de l'intensité lumineuse des sources lumineuses 4 permettent de discerner les défauts de surface de l'écran de visualisation 6. Ces variations peuvent être obtenues par des moyens entrainant des déplacements des sources lumineuses 4, tels que rotation, défilement, oscillation, vibration.

Selon un autre mode encore de réalisation, une lame semi-réfléchissante 11 peut être interposée entre le support 3 et un verre 1.

Cette mise en oeuvre permet de déplacer l'axe de vision de l'image apparaissant sur l'écran de visualisation 6 dans une autre direction.

Dans un mode de réalisation particulier, l'image reprise par les moyens de capture 8 est analysée par un ordinateur ou système électronique, pour localiser la monture 10 des lunettes, les marquages des verres 1, la mire 30, le centre et/ou axe optique pour faire les mesures.

L'image est visible à l'oeil nu par l'utilisateur sur les deux faces de l'écran de visualisation 6. Les mesures peuvent être faites à l'aide d'un réglet directement sur l'écran de visualisation 6. L'image peut être captée par une caméra ou tout autre système pour être analysée et traitée par un ordinateur, pour faire les mesures nécessaires au contrôle d'une monture 10 équipée de ces verres.

Les repères sur les verres pouvant être ceux apposés par l'opticien, ou par le fabricant du verre ou du laboratoire de prescription ou par une autre machine comme un frontofocomètre.

Une ou plusieurs images peuvent être captées avec et sans verres 1.

Afin d'améliorer la visibilité des marques du verre 1 et de la mire 30, la machine peut utiliser plusieurs images. L'ordinateur peut utiliser la moyenne et/ou la variance des images pour le traitement informatique de l'image pour en améliorer la définition et le contraste.

L'ordinateur peut comparer les images avec et sans verres 1, peut calculer la déformation de la mire 30 et en déduire la position du centre optique et/ou axe du cylindre des deux verres 1 pour en déduire les points de référence de mesure des écarts pupillaires 9, demi-écarts 91, hauteur de montage, axes, etc.

Pour les verres 1 ayant des marquages, le dispositif 2 peut localiser automatiquement les marquages des deux verres 1 de correction et/ou solaire, pour en déduire les points de référence de mesure des écarts pupillaires 9, demi-écarts 91, hauteur de montage, axes, etc.

Dans un autre mode de réalisation, afin d'obtenir des machines moins couteuses, l'utilisateur peut tracer directement sur l'écran de visualisation 6 ou sur un support transparent posé sur l'écran de visualisation 6, les marquages des verres 1, les contours de la monture 10 et les constructions géométriques nécessaires pour mesurer et calculer les écarts pupillaires 9, demi-écarts pupillaires 91, axe, hauteur de montage ou toutes les mesures relatives au contrôle du montage des verres 1 ophtalmiques et/ou solaires dans une monture 10 de lunettes.

Ainsi, le dispositif 2 permet la visualisation dans une même image, en une seule manipulation pour l'utilisateur, sans risque de détériorer les verres 1 et/ou la monture 10 et sans avoir à ajouter de marque sur les verres 1 :
- L'ensemble de la monture 10 des lunettes comprenant les verres 1 ;
- Les marquages des verres 1, permanents et/ou temporaires ;
- Le centre optique et/ou l'axe du cylindre des verres 1 maintenus dans une monture 10 de lunettes.

Ainsi les écarts pupillaires 9, demi-écarts 91, hauteurs de montage et axes des verres sont mesurés en rapport à la monture 10 dans son ensemble et de la même manière pour les deux verres de lunettes.

La mesure de l'écart pupillaire 9 est mesurée comme la distance entre les points de référence de chacun des deux verres 1 et ceci sans côte intermédiaire.

Sur l'image complète de la monture 10, le logiciel et/ou l'utilisateur peut pointer le milieu du pont 12 (correspondant au nez) sur la monture 10 ou des plaquettes de nez, comme point de référence pour les demi-écarts pupillaires 91. Ces écarts et demi écart pupillaires (9 et 91) peuvent être mesurés par rapport à la forme réelle et les réglages réels de monture 10 en comparaison avec la physionomie du porteur de la monture 10. Ceci s'applique plus particulièrement quand la monture 10 est asymétrique.

Sur l'image complète de la monture 10, le logiciel et/ou l'utilisateur peut pointer une ou deux lignes sur la monture 10, « boxing », servant de référence. C'est perpendiculairement et parallèlement à cette référence que peuvent être mesurées la hauteur de montage et l'axe de chaque verre 1.

Le dispositif 2 peut être relié à une imprimante et/ou à internet afin d'imprimer et numériser l'image et les résultats obtenus afin d'être exploités ultérieurement.

Le dispositif 2 permet de mesurer les écarts pupillaires 9, demi-écarts 91, hauteurs de montage et l'axe des verres dans une monture 10 existante portée par une personne, permettant ainsi à l'opticien de fabriquer une nouvelle paire de lunettes pour cette personne à partir des côtes, écarts pupillaires 9, demi-écarts 91, etc. ainsi mesurés sur ses lunettes afin de reproduire à l'identique ou améliorer, des cotes particulièrement adaptées à ce client comme l'orientation des verres 1 progressifs, l'orientation pouvant sortir des critères standards des verres progressifs à cause d'un comportement ou de caractéristiques physiques du porteur de lunettes, comme un manque de convergence en vison de prêt.

Dans un autre mode d'utilisation du dispositif 2, alors que l'opticien reçoit un client déjà équipé de lunette avec verres progressifs, pour un devis pour remplacer les verres ou les lunettes, l'opticien en plaçant les lunettes sur le dispositif 2 visualisera et identifiera les marquages invisibles des verres 1 progressifs via une base de données dans la machine et/ou sur internet, et donnera au fabricant le type de verres 2 progressifs. L'opticien ainsi informé pourra proposer le même type de verres progressifs ou bien trouver des équivalents dans la marque qu'il distribue ou bien d'autres verres progressifs plus adaptés au client suite aux remarques que son client aura faits sur ses anciens verres progressifs.

Dans encore un autre mode de réalisation du dispositif 2, ledit écran de visualisation 6 est la cellule de réception de ladite caméra.

Dans ce cas spécifique, l'écran de visualisation 6 est situé dans la caméra.

Comme évoqué précédemment, l'invention vise aussi le procédé de visualisation d'au moins un marquage d'au moins un verre 1 ophtalmique au sein d'une monture de lunettes.

Dans un tel procédé, on opère les étapes suivantes :
- on dispose lesdits verres 1 entre au moins une source lumineuse 4 et un écran de visualisation 6 ;
- on émet depuis lesdites sources lumineuses 4 et au moins une lentille de collimation 5 associée au moins un faisceau lumineux en direction dudit écran de visualisation 6 au travers d'au moins un des verres 1 ;
- on soumet selon le cas ledit écran de visualisation 6 et/ou lesdites sources lumineuses 4 à un déplacement sensiblement orthogonal à la direction dudit faisceau lumineux ;
- on visualise les faisceaux captés sur ledit écran de visualisation 6.

Le procédé peut consister aussi en l'étape :
- on déplace ledit écran de visualisation 6 et/ou lesdites sources lumineuses 4 de façon périodique sous forme d'une translation ou d'une vibration.

Le procédé peut encore consister en l'étape :
- On illumine lesdits verres 1 au travers d'une mire 30.

Selon un autre mode de réalisation, le procédé consiste en l'étape :
- On fait varier l'intensité lumineuse desdites sources lumineuses 4.

Un tel procédé de visualisation peut aussi consister à mesurer des points du faisceau visualisé sur ledit écran de visualisation 6 en déplacement, comme la mesure des écarts pupillaires 9 et/ou des demi-écarts pupillaires 91.

Il peut consister à effectuer un traitement logiciel automatique du faisceau visualisé sur ledit écran de visualisation 6 en déplacement et de reconnaissance d'au moins un marquage situé au niveau de chaque verre 1.

En outre, le traitement peut consister à reconnaître les marquages permanents et provisoires de chaque verre 1 et de comparer la position relative des marquages permanents par rapport aux marquages provisoires.

De façon complémentaire, le dispositif 2 de l'invention peut être utilisé pour effectuer une opération de glantage de chaque verre 1.

Le glantage consiste à bloquer un verre, en apposant sur une de ses surfaces, un gland qui le maintiendra lors des étapes d'usinage. En vue d'opérer ce blocage, certains types de verres nécessitent d'être recouvert au niveau de ladite face de réception du gland, notamment par recouvrement au moyen d'une couche protectrice, notamment adhésive, comme un film en matériau plastique autoadhésif. Après usinage, cette couche est retirée.

L'invention permet de mesurer au préalable les marquages permanents et provisoires, leurs positions relatives, de sorte que, lorsque ladite couche est en place et que seuls les marquages provisoires sont visibles, il est alors possible de positionner correctement le verre 1 à usiner. En effet, une fois la couche apposée, les marquages permanents sont difficiles à visualiser.

Ainsi, le dispositif de visualisation 2 selon l'invention peut être couplé à une machine de glantage, en vue positionner avec précision les verres 1 sur ladite machine, avant blocage et usinage.

En outre, au sein d'un tel système de vision, couplant le dispositif de visualisation 2 et la machine de glantage, ledit dispositif 2 peut comprendre des moyens de capture 8 complétés par un objectif télécentrique. Un tel système permet de visualiser le marquage provisoire, effaçable, puisque le marquage permanent n'est plus visible à cause du film de protection apposé sur le verre 1. Ainsi, avec les données obtenues à partir du dispositif de visualisation 2 selon l'invention, le système de vision installé sur la machine de glantage compensera l'écart de positionnement du marquage effaçable par rapport au marquage permanent, ainsi que la parallaxe.

De façon préférentielle, mais aucunement, le dispositif de visualisation 2 peut être placé et intégré dans un appareil qui dépose le film de protection sur le verre 1.

Dans ce cadre spécifique de mise en oeuvre, une image est prise par le dispositif de visualisation 2, en utilisant le procédé selon l'invention, avant de déposer le film de protection sur le verre 1. Deux marquages, permanent et provisoire (c'est-à-dire effaçable), sont visualisés. Il n'y a pas de parallaxe, le verre étant posé à plat. Le film de protection est apposé puis est prise une image du verre recouvert de son film de protection, une fois que ledit verre est placé dans la machine de glantage. Le verre est alors incliné. On y voit que le marquage effaçable est déformé par la parallaxe. Le marquage permanent n'est plus visible à cause du film de protection.

Dès lors, on calcule la parallaxe, valeur et direction, en comparant les deux images du marquage effaçables. On applique alors cette parallaxe pour reporter dans l'image du verre avec le film de protection, la position du marquage permanent corrigé de ladite parallaxe.

Ainsi, l'invention permet d'assurer un positionnement par rapport au marquage permanent, sans subir l'erreur d'alignement du marquage effaçable et de l'erreur de parallaxe.

L'invention permet donc de simplifier considérablement la mise en oeuvre du dispositif 2 et de son procédé de visualisation, en diminuant leur complexité et, de ce fait, leur coût de fabrication. De plus, elle améliore la netteté du marquage reporté, du fait de la propagation longitudinal du faisceau et du report de son image sur une surface dans un unique plan, orthogonal à l'axe de propagation dudit faisceau. Enfin, l'invention permet de vérifier automatiquement ou visuellement à l'oeil nu le marquage ainsi reporté.

## Revendications

1. Procédé de visualisation en une seule manipulation d'au moins un marquage de chaque verre ophtalmique (1) au sein d'une monture de lunettes, dans lequel :
- on dispose lesdits verres (1) entre au moins une source lumineuse (4) et un écran de visualisation (6) ;
- on émet, depuis lesdites sources lumineuses (4) et au moins une lentille de collimation (5) associée, au moins un faisceau lumineux en direction dudit écran de visualisation (6) au travers de chacun des verres (1,) et on illumine lesdits verres (1) au travers d'au moins une mire (30) ;
- on soumet selon le cas ledit écran de visualisation (6) et/ou lesdites sources lumineuses (4) à un déplacement sensiblement orthogonal à la direction dudit faisceau lumineux ;
- on visualise les faisceaux captés au travers de chaque verre sur ledit écran de visualisation (6).

2. Procédé de visualisation selon la revendication 1, **caractérisé en ce qu'**on déplace ledit écran de visualisation (6) et/ou lesdites sources lumineuses (4) de façon périodique sous forme d'une translation ou d'une vibration.

3. Procédé de visualisation selon l'une quelconque des revendications 1 ou 2, **caractérisé en ce qu'**on fait varier l'intensité lumineuse desdites sources lumineuses (4).

4. Procédé de visualisation selon l'une quelconque des revendications précédentes, **caractérisé en ce qu'**il consiste à mesurer des points des faisceaux visualisés sur ledit écran de visualisation (6), comme la mesure des écarts pupillaires (9) et/ou des demi-écarts pupillaires (91).

5. Procédé de visualisation selon l'une quelconque des revendications précédentes, caractérisé en qu'il consiste à effectuer un traitement logiciel automatique des faisceaux visualisés sur ledit écran de visualisation (6) et de reconnaissance d'au moins un marquage situé au niveau de chaque verre (1).

6. Procédé de visualisation selon la revendication précédente, **caractérisé en ce que** le traitement consiste à reconnaître les marquages permanents et provisoires de chaque verre (1) et de comparer la position relative des marquages permanents par rapport aux marquages provisoires.

7. Procédé de visualisation selon la revendication précédente, **caractérisé en ce qu'**il consiste à effectuer une opération de glantage de chaque verre (1).

8. Dispositif (2) de visualisation en une seule manipulation d'au moins un marquage de chaque verre ophtalmique maintenu au sein d'une monture de lunettes, comprenant :
- au moins une source lumineuse (4) émettant au moins un faisceau lumineux au travers d'au moins une lentille de collimation (5), lesdits faisceaux traversant chaque verre (1) ;
- un écran de visualisation (6) placé à l'opposé desdites sources lumineuses (4) pour visualiser lesdits faisceaux ;
- lesdites sources (4) et ledit écran de visualisation (6) étant alignés selon un même axe et parallèles entre eux ;
ledit dispositif (2) comprenant en outre des moyens de mise en déplacement dudit écran de visualisation (6) et/ou desdites sources lumineuses (4) selon un plan orthogonal à la direction desdits faisceaux, et au moins une mire (30) intercalée entre lesdites lentilles de collimation (5) et lesdits verres (1).

9. Dispositif (2) de visualisation selon la revendication 8, **caractérisé en ce qu'**il comprend des moyens de variation de l'intensité lumineuse desdites sources lumineuses (4).

10. Dispositif (2) de visualisation selon l'une quelconque des revendications 8 ou 9, **caractérisé par le fait qu'**il comprend des moyens de capture (8) sous forme d'au moins un scanner lumineux, une caméra, une caméra équipant un téléphone ou équipant une tablette, positionnée du côté de la face opposée (61) dudit écran de visualisation (6) par rapport auxdits faisceaux.

11. Dispositif (2) de visualisation selon la revendication précédente, **caractérisé par le fait qu'**il comprend des moyens de mesure de l'écartement des points desdits faisceaux sur ledit écran de visualisation (6) au niveau de sa face opposée (61).

12. Dispositif (2) de visualisation selon l'une quelconque des revendications 10 à 11, **caractérisé par le fait que** ledit écran de visualisation (6) est la cellule de réception de ladite caméra.

## Patentansprüche

1. Verfahren zur Visualisierung mindestens einer Markierung an jedem Brillenglas (1) in einer Brillenfassung in einem einzigen Schritt, wobei das Verfahren umfasst:
- Anordnen der Gläser (1) zwischen mindestens einer Lichtquelle (4) und einem Bildschirm (6);
- Emittieren mindestens eines Lichtstrahls aus den Lichtquellen (4) und mindestens einer damit verbundenen Kollimationslinse (5) in Richtung des Bildschirms (6) durch jedes der Gläser (1) und Beleuchten der Gläser (1) durch mindestens ein Prüfbild (30);
- ggf. Verschieben des Bildschirms (6) und/oder der Lichtquellen (4) im Wesentlichen orthogonal zur Richtung des Lichtstrahls;
- Visualisieren der vom Bildschirm (6) erfassten Strahlen, die durch Glas passiert haben.

2. Verfahren nach Anspruch 1, **dadurch gekennzeichnet, dass** der Bildschirm (6) und/oder die Lichtquellen (4) in Form einer Translation oder Vibration periodisch verschoben werden.

3. Verfahren nach einem der Ansprüche 1 oder 2, **dadurch gekennzeichnet, dass** die Lichtstärke aus den Lichtquellen (4) variiert wird.

4. Verfahren nach einem der vorstehenden Ansprüche, **dadurch gekennzeichnet, dass** es darin besteht, Punkte der Lichtstrahlen auf dem Bildschirm (6), wie z.B. Pupillenabstände (9) und/oder halbe Pupillenabstände (91), zu messen.

5. Verfahren nach einem der vorstehenden Ansprüche, **dadurch gekennzeichnet, dass** es darin besteht, eine automatische Softwareverarbeitung der Lichtstrahlen auf jedem Bildschirm (6) und eine Erkennung mindestens einer Markierung an jedem Glas (1) vorzunehmen.

6. Verfahren nach dem vorstehenden Anspruch, **dadurch gekennzeichnet, dass** die Verarbeitung darin besteht, die dauerhaften und vorläufigen Markierungen an jedem Glas (1) zu erkennen und die relative Lage der dauerhaften Markierungen mit den vorläufigen Markierungen zu vergleichen.

7. Verfahren nach dem vorstehenden Anspruch, **dadurch gekennzeichnet, dass** es darin besteht, jedes Glas (1) aufzukitten.

8. Vorrichtung (2) zur Visualisierung mindestens einer Markierung an jedem Brillenglas (1) in einer Brillenfassung in einem einzigen Schritt, wobei das Verfahren umfasst:
- mindestens eine Lichtquelle (4), die mindestens einen Lichtstrahl durch mindestens eine Kollimationslinse (5) emittiert, wobei die Strahlen jedes Glas (1) durchqueren;
- einen Bildschirm (6), der den Lichtquellen (4) gegenübersteht, um die Lichtstrahlen zu visualisieren;
- wobei die Quellen (4) und der Bildschirm (6) entlang derselben Achse ausgerichtet sind und einander parallel sind;
wobei die Vorrichtung (2) ferner Mittel zur Verschiebung des Bildschirms (6) und/oder der Lichtquellen (4) auf einer Ebene orthogonal zur Richtung der Strahlen sowie mindestens ein zwischen den Kollimationslinsen (5) und den Gläsern (1) angeordnetes Prüfbild (30) umfasst.

9. Vorrichtung (2) nach Anspruch 8, **dadurch gekennzeichnet, dass** sie Mittel zur Variation der Lichtstärke der Lichtquellen (4) umfasst.

10. Vorrichtung (2) nach einem der Ansprüche 8 oder 9, **dadurch gekennzeichnet, dass** sie Erfassungsmittel (8) in Form mindestens eines Lichtscanners, einer Kamera, einer Kamera mit Telefon oder einer Kamera mit Tablet umfasst, die relativ zu den Lichtstrahlen auf der gegenüberliegenden Seite (61) des Bildschirms (6) angeordnet ist.

11. Vorrichtung (2) nach dem vorstehenden Anspruch, **dadurch gekennzeichnet, dass** sie Mittel zur Messung des Abstands der Punkte der Strahlen auf dem Bildschirm (6) auf dessen gegenüberliegenden Seite (61) umfasst.

12. Vorrichtung (2) nach einem der Ansprüche 10 - 11, **dadurch gekennzeichnet, dass** es sich beim Bildschirm (6) um die Empfangszelle der Kamera handelt.

## Claims

1. Display method for visualizing in a single manipulation at least one marking of each ophthalmic lens (1) within a spectacle frame, wherein:
- the glasses (1) are arranged between at least one light source (4) and a display screen (6);
- at least one light beam is emitted from the light sources (4) and at least one associated collimating lens (5) towards the display screen (6) through each of the glasses (1) in order to illuminate the glasses (1) through at least one test pattern (30);
- according to the case, the display screen (6) and/or the light sources (4) are subjected to a displacement that is substantially orthogonal to the direction of the light beam;
- the beams collected through each glass are visualized on the display screen (6).

2. Display method according to claim 1, **characterized in that** the display screen (6) and/or the light sources (4) are periodically displaced by means of a translation or a vibration.

3. Display method according to any one of the claims 1 or 2, **characterized in that** the light intensity of the light sources (4) may be varied.

4. Display method according to any one of the preceding claims, **characterized in that** it consists in measuring points of the beams displayed on the display screen (6), such as the measurement of pupillary distances (9) and/or pupillary half-distances (91).

5. Display method according to any one of the preceding claims, **characterized in that** it consists in running automatic software processing of the beams displayed on the display screen (6) and recognition of at least one marking located on each glass (1).

6. Display method according to the preceding claim, **characterized in that** the processing consists in recognizing the permanent and temporary markings of each glass (1) and comparing the relative position of the permanent markings with respect to the provisional markings.

7. Display method according to the preceding claim, **characterized in that** it consists in performing a blocking operation of each glass (1).

8. Display device (2) for visualizing in a single manipulation 10 at least one marking of each ophthalmic glass held within a spectacle frame, comprising:
- at least one light source (4) emitting at least one light beam through at least one collimating lens (5), wherein the beams pass through each glass (1);
- a display screen (6) placed opposite the light sources (4) for visualizing the beams;
- the sources (4) and the display screen (6) are aligned along the same axis and parallel to each other;
- the device (2) further comprises means for displacing the display screen (6) and/or the light sources (4) in a plane orthogonal to the direction of the beams, and at least one test pattern (30) interposed between the collimating lenses (5) and the glasses (1).

9. Display device (2) according to claim 8, **characterized in that** it comprises means for varying the light intensity of the light sources (4).

10. Display device (2) according to any one of the claims 8 or 9, **characterized in that** it comprises capture means (8) in the form of at least one light scanner, a camera, a camera equipping a telephone or equipping a tablet, positioned on the side of the face (61) opposite the display screen (6) with respect to the beams.

11. Display device (2) according to the preceding claim, **characterized in that** it comprises means for measuring the spacing of the points of the beams on the display screen (6) at its opposite face (61).

12. Display device (2) according to any one of claims 10 to 11, **characterized in that** the display screen (6) is the reception cell of the camera.
